Europäisches Patentamt

European Patent Office

Office européen des brevets

(19)

(11) **EP 0 541 409 B1**

(12)

# FASCICULE DE BREVET EUROPEEN

(45) Date de publication et mention
de la délivrance du brevet:
**01.04.1998 Bulletin 1998/14**

(51) Int Cl.⁶: **H04B 10/26**

(21) Numéro de dépôt: **92402668.5**

(22) Date de dépôt: **29.09.1992**

(54) **Système de transmission bidirectionnelle, notamment par fibre optique, avec une porteuse unique pour les deux sens de transmission**

Bidirektionales Übertragungssystem, insbesondere faseroptisches, mit einem einzelnen Träger für beide Übertragungsrichtungen

Bidirectional transmission system, especially by optical fibre, using a single carrier for both transmission directions

(84) Etats contractants désignés:
**AT BE CH DE ES FR GB IT LI NL SE**

(30) Priorité: **04.10.1991 FR 9112263**

(43) Date de publication de la demande:
**12.05.1993 Bulletin 1993/19**

(73) Titulaire: **ALCATEL ALSTHOM COMPAGNIE GENERALE D'ELECTRICITE**
**75008 Paris (FR)**

(72) Inventeurs:
 • **Perrier, Philippe**
  **F-75013 Paris (FR)**
 • **Gautheron, Olivier**
  **F-91120 Palaiseau (FR)**

(74) Mandataire: **El Manouni, Josiane et al**
**ALCATEL ALSTHOM,**
**Département de Propriété Industrielle,**
**30, avenue Kléber**
**75116 Paris (FR)**

(56) Documents cités:
  **EP-A- 509 500**      **EP-A- 0 227 164**
  **WO-A-87/02531**     **WO-A-87/06084**
  **FR-A- 2 558 025**     **GB-A- 2 196 809**
  **US-A- 3 943 284**     **US-A- 5 005 212**

 • **PATENT ABSTRACTS OF JAPAN vol. 6, no. 136 (E-120)(1014) 23. Juillet 1982 & JP-A-57 060 762 ( YUKIMI TAKAO )**

**Description**

La présente invention concerne un système de transmission bidirectionnelle, notamment par fibre optique, avec une porteuse unique pour les deux sens de transmission.

La présente invention est notamment utilisable pour réaliser une transmission bidirectionnelle sur une liaison, notamment à fibre optique, entre deux équipements dits terminaux de cette liaison, lorsque l'un de ces équipements terminaux, dit terminal utilisateur, doit être aussi simple que possible, et ne doit en particulier pas comporter de source de porteuse, notamment optique.

Un tel terminal utilisateur peut être par exemple un terminal d'abonné à un réseau de télécommunications tel que par exemple le réseau téléphonique, notamment dans le cadre d'une réalisation photonique du raccordement d'abonnés à ce réseau. Dans ce qui suit on considèrera plus particulièrement, à titre d'exemple, cette application.

Plusieurs techniques ont ainsi été envisagées pour réaliser une telle transmission bidirectionnelle, par fibre optique, entre des terminaux d'abonnés et leur centre local de rattachement au réseau téléphonique.

Pour chacune des techniques répertoriées ci-dessous, seule une liaison (entre un abonné et le centre local) a besoin d'être considérée, même si un ensemble d'abonnés peuvent être raccordés au centre local par cette même liaison, notamment par multiplexage.

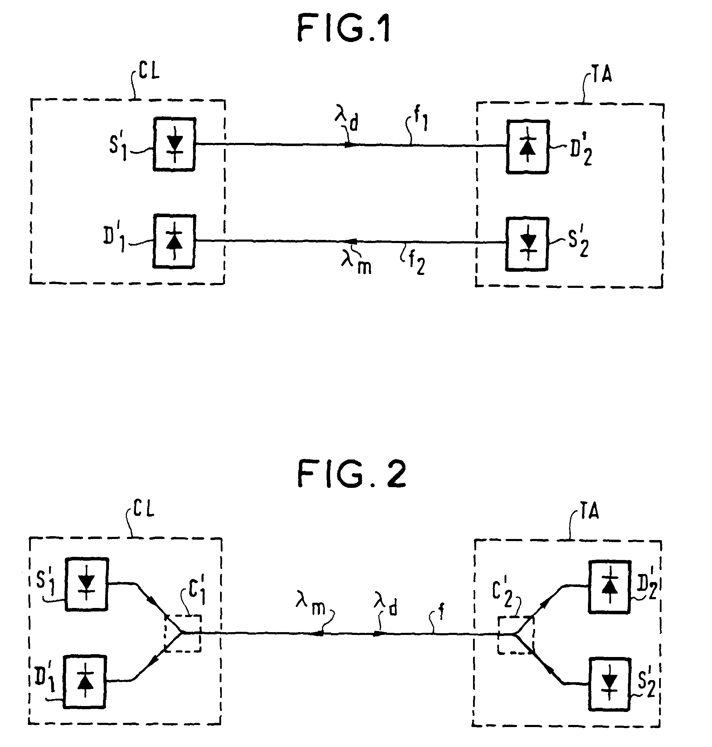

Une première technique est rappelée sur la figure 1.

Dans cette technique, le centre local, CL, et le terminal d'abonné, TA, sont reliés par deux fibres optiques, la transmission des informations du centre local vers l'abonné (soit dans un sens dit descendant) s'effectuant sur une fibre, $f_1$, distincte de celle, $f_2$, sur laquelle les informations de l'abonné sont transmises vers le centre local (soit dans un sens dit montant).

Les inconvénients de cette première technique sont la duplication de tous les équipements de transmission (deux émetteurs optiques incluant chacun une source optique $S'_1$, $S'_2$, deux fibres optiques $f_1$, $f_2$ et deux récepteurs optiques $D'_1$, $D'_2$), et la présence d'une source optique au terminal d'abonné.

Une deuxième technique, rappelée sur la figure 2 et décrite notamment dans le document IEEE Global Telecommunications Conference, paper 48.1, PP. 1569-1573, 1988 : S.S Wagner, H.L Lemberg, H. Kobrinski, L.S. Smoot, and T.J. Robe, "A passive photonic loop architecture employing wavelength-division multiplexing," exploite la grande bande passante de la fibre optique pour autoriser, sur une seule fibre, f, une transmission bidirectionnelle entre le centre local CL et le terminal d'abonné TA. En plus des émetteurs optiques $S'_1$, $S'_2$ et des récepteurs optiques $D'_1$, $D'_2$, des coupleurs optiques $C'_1$, $C'_2$ sont alors requis pour distinguer les deux sens de transmission, respectivement au centre local et au terminal d'abonné. Deux longueurs d'onde peuvent être allouées pour une communication, une $\lambda_d$,

pour le sens descendant, une autre, $\lambda_m$, pour le sens montant. De par la nature de la lumière, la même longueur d'onde peut cependant être utilisée pour les deux sens de transmission, comme décrit par exemple dans le document Electronics Letters, Vol. 20, No.18, pp. 722-723, 1984.A.P McDonna, D.J. McCartney, and D. B. Mortimore," 1.3 µm bidirectional optical transmission over 31 km of installed single-mode fibre using optical couplers". Le désavantage majeur de ce type de technique reste cependant la présence d'une source optique au terminal d'abonné.

Une variante dite de "ping-pong", pour cette deuxième technique, consiste à réserver des intervalles de temps pour la transmission dans le sens montant et d'autres intervalles de temps pour la transmission dans le sens descendant. Mais plusieurs désavantages viennent alors s'ajouter à celui mentionné ci-dessus :

- la transmission simultanée dans les deux sens n'est pas possible;
- une synchronisation des temps de transmission prenant en compte les temps de propagation entre le centre local et l'abonné est requise.

Comme indiqué précédemment, un système qui utilise une porteuse optique générée au terminal utilisateur n'est pas attrayante, notamment pour un système de raccordement d'abonnés, et cela alors principalement pour deux raisons :

- la longueur d'onde allouée pour la transmission dans le sens montant, qu'elle soit différente ou non de celle utilisée pour la transmission dans le sens descendant, doit être contrôlée pour minimiser les interférences avec les autres communications.

L'asservissement requis pour garantir la stabilité en longueur d'onde est rendu difficile par le fait de l'éloignement des abonnés les uns par rapport aux autres et par rapport au centre local.

- l'utilisation d'une longueur d'onde spécifique pour la transmission dans le sens montant exige que chaque abonné ait un équipement d'émission (incluant une source optique) différent, et qui, de plus, soit compatible avec l'équipement de réception au centre local.

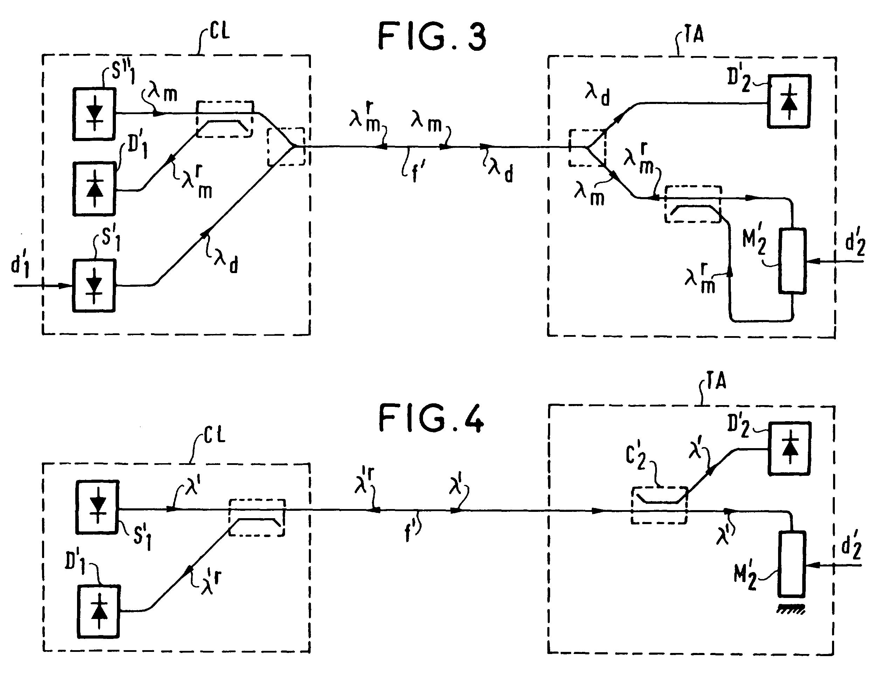

Une technique permettant de se dispenser d'une source optique au terminal d'abonné, et décrite par exemple dans le document Electronics Letters, Vol. 23, No; 18, pp. pp.943-944, 1987, H. Kobrinski and S.S. Cheng, "Laser power sharing in the subscriber loop," est rappelée sur la figure 3.

Comme dans les techniques précédentes, les informations, notées $d'_1$, issues du centre local sont transmises à l'abonné par modulation, dans un émetteur $S'_1$ incluant une source optique, d'une porteuse optique de longueur d'onde $\lambda_d$ issue de cette source optique. Pour la transmission dans le sens montant, une autre source optique située au centre local, repérée S"1, transmet à l'abonné, sur la même fibre, f', une porteuse à une lon-

gueur d'onde $\lambda_m$ distincte de $\lambda_d$. L'abonné module, par le biais d'un modulateur M'2, cette porteuse optique avec ses informations à émettre, notées d'2. Une fois modulée, cette porteuse optique, toujours à la longueur d'onde $\lambda_m$, mais notée $\lambda_m^r$, (pour renvoyée), est renvoyée, en l'occurence sur la même fibre, vers le centre local.

Dans un système basé sur cette technique , l'absence de source optique chez l'abonné élimine la nécessité d'un asservissement en longueur d'onde entre tous les abonnés du réseau. Un asservissement des sources lumineuses au centre local reste toutefois nécessaire; celui-ci est cependant plus facile à réaliser de par le fait que ces sources sont toutes localisées dans le centre local. Un tel système présente cependant l'inconvénient de nécessiter deux sources optiques au lieu d'une seule au centre local.

Une variante de cette technique utilisant une seule porteuse optique est décrite par exemple dans le document "Electronics Letters, Vol. 22, No. 10, pp. 528-529, 1986, T.H. Wood, E.C. Carr, B.L. Kasper, R.A. Linke, C. A. Burus, and K.L. Walker, "Bidirectional fibre-optical transmission using a multiple-quantum-well (MQW) modulator/detector". Cette variante utilise, au terminal d'abonné, un même composant qui réalise la modulation et la détection. Ce composant ne peut cependant fonctionner simultanément comme modulateur et comme détecteur, et donc la transmission dans le sens montant ne peut avoir lieu en même temps que la transmission dans le sens descendant.

Une technique permettant une transmission bidirectionnelle, simultanée, et avec une seule porteuse optique, de signaux optiques entre un abonné et un centre local, décrite par exemple dans le document "Conference on Optical Fiber Communication (Atlanta, Georgia, USA, 24-26 February 1986), Technical Digest, paper MH4, pp. 14-15, P.J Duthie, M.J. Wale, J. Hankey, M.J. Goodwin, W.J Stewart, I. Bennion, and A.C. Carter, "Simultaneous bidirectional fiber-optic transmission using a single source", est rappelée sur la figure 4.

Une seule source optique, localisée au centre local, et comprise dans un émetteur S'1, est ici utilisée pour réaliser une transmission bidirectionnelle et simultanée entre un centre local et un terminal d'abonné. Pour la transmission dans le sens descendant, la porteuse issue de cette source optique est modulée en amplitude, le signal lumineux ainsi obtenu est transmis sur une fibre f', et une partie du flux correspondant, prélevée par un coupleur C'2, est détectée au terminal d'abonné par le récepteur D'2. Pour la transmission dans le sens montant, l'abonné superpose son signal, noté d'2, au moyen d'un modulateur M'2 du type coupleur directionnel sur la partie non détectée du flux lumineux utilisé pour la transmission dans le sens descendant et issue également du coupleur C'2. La porteuse optique résultante est réfléchie au moyen d'un miroir pour être transmise au centre local, à la même longueur d'onde $\lambda'$, notée cependant $\lambda'^r$ (pour réfléchie) et sur la même fibre f'.

Cependant, afin de permettre, au centre local, une restitution du signal d'2 émis par l'abonné, le débit de transmission dans le sens montant doit être choisi plus faible que celui dans le sens descendant.

Cette technique ne pourrait donc en particulier être utilisée pour transmettre des informations au même débit dans les deux sens. Un autre inconvénient de cette technique réside dans le fait que, dans le cas d'une information transmise en numérique, l'information dans le sens descendant doit être codée de manière à éviter de longues séquences de valeurs zéro pendant lesquelles l'abonné ne pourrait transmettre (puisqu'il ne recevrait plus alors de flux lumineux).

La demande de brevet EP-A-0 509 500 qui appartient à l'état de la technique tel que défini à l'article 54 (3) CBE décrit un système de transmission bidirectionnelle dans lequel les deux sens de transmission sont distingués par des procédés de modulation distincts :

- Le terminal source réalise une modulation de fréquence ou de phase, indirectement en modulant l'intensité d'un laser;
- Le terminal utilisateur réalise une modulation d'intensité sur la même porteuse avant de la renvoyer au terminal source.

La demande de brevet FR-A-2 558 025 décrit un système de transmission bidirectionnelle dans lequel :

- Le terminal source réalise une première modulation d'intensité.
- Le terminal utilisateur réalise une seconde modulation d'intensité sur la même porteuse avant de la renvoyer au terminal source.
- La discrimination entre le signal émis par le terminal source et le signal émis par le terminal utilisateur est réalisée en affectant à ces deux signaux des bandes spectrales distinctes qui sont séparables par un filtrage du signal électrique fourni par chaque photorécepteur.

La présente invention a notamment pour but la réalisation d'un système de transmission bidirectionnelle, avec une porteuse unique pour les deux sens de transmission, qui autorise une transmission simultanée dans ces deux sens, et qui ne présente pas les inconvénients précités.

L'invention a pour objet un système de transmission bidirectionnelle, par fibre optique, entre un terminal dit terminal source et un terminal dit terminal utilisateur, avec une porteuse unique pour les deux sens de transmission, issue d'une source localisée dans le terminal source;
caractérisé en ce qu'il comporte, pour chaque sens de transmission, des moyens de modulation de l'intensité de ladite porteuse;
et en ce que le taux de la modulation appliquée en premier, soit pour la transmission du terminal source vers le terminal utilisateur, dite transmission dans le sens descendant, est suffisamment faible pour permettre en permanence la modulation d'intensité appliquée en second, soit pour la transmission du terminal utilisateur vers le terminal source, dite transmission dans le sens montant.

D'autres objets et caractéristiques de la présente invention apparaîtront à la lecture de la description suivante d'exemples de réalisation, faite en relation avec les dessins ci-annexés dans lesquels, outre les figures 1 à 4 déjà décrites et relatives à l'art antérieur :

- la figure 5 est un schéma d'un système de transmission suivant un exemple de réalisation de l'invention;
- la figure 6 rappelle le mécanisme de modulation directe de l'intensité d'une porteuse optique issue d'une source optique telle qu'une diode laser, par un signal modulant numérique, une telle modulation étant, suivant cet exemple de réalisation, utilisée pour la transmission du terminal source vers le terminal utilisateur,
- les figures 7A et 7B illustrent respectivement la forme temporelle de la puissance optique reçue et de la puissance optique réémise par le terminal utilisateur, dans cet exemple de réalisation.

Suivant un premier exemple de réalisation de l'invention, la transmission bidirectionnelle, simultanée, et au moyen d'une seule porteuse optique, entre un terminal source, comportant une source optique fournissant ladite porteuse, et un terminal utilisateur, est obtenue par modulation de l'intensité de cette porteuse pour la transmission dans les deux sens, à savoir descendant (soit du terminal source vers le terminal utilisateur) et montant (soit du terminal utilisateur vers le terminal source), la modulation d'intensité appliquée pour la transmission dans le sens descendant étant effectuée entre un niveau bas, Pb, relativement éloigné de zéro, et un niveau haut, Ph, et la modulation appliquée pour la transmission dans le sens montant étant effectuée entre un niveau Po voisin de zéro et le niveau Pb, c'est-à-dire sur la puissance optique émise par la source optique et qui n'a pas été modulée pour la transmission dans le sens descendant.

La modulation d'intensité pour la transmission dans le sens descendant est par exemple une modulation directe d'intensité de ladite porteuse.

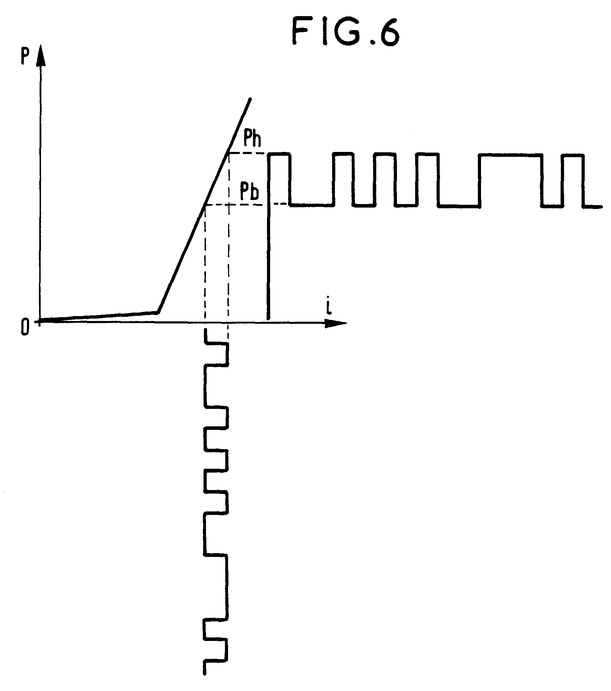

La manière de générer un tel signal optique par modulation directe est rappelée sur la figure 6 qui représente d'une part la forme générale de la caractéristique de puissance optique de sortie d'une source optique telle qu'une diode laser, en fonction de son courant de commande "i", et d'autre part la forme de la puissance optique de sortie en fonction du temps, à titre d'exemple pour un courant de commande sous forme numérique correspondant par exemple à la séquence 1001010100111010, et en l'occurence avec une modulation appliquée entre les niveaux Pb et Ph tels que définis ci-dessus.

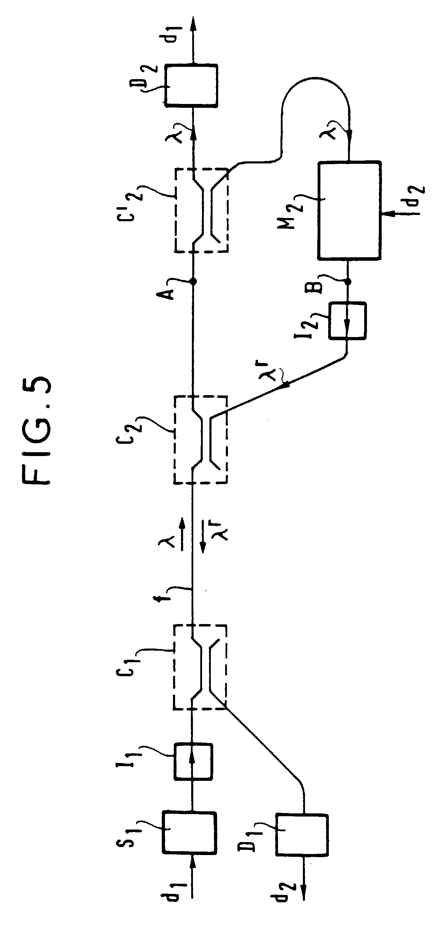

Comme illustré sur la figure 5, l'équipement terminal source comporte, suivant ce premier exemple de réalisation :

- un émetteur optique $S_1$ comportant une source optique telle qu'une diode laser émettant à une longueur d'onde notée $\lambda$, munie d'une entrée de commande pour l'application d'un signal $d_1$ de modulation d'intensité, en l'occurence d'un signal de modulation directe, à transmettre dans le sens descendant,
- un récepteur optique $D_1$ pour la détection d'un signal $d_2$ de modulation transmis dans le sens montant,
- un coupleur passif $C_1$ permettant d'utiliser une seule fibre f pour les deux sens de transmission, et dont trois accès sont connectés à la sortie de l'émetteur $S_1$, à l'entrée du récepteur $D_1$, et à une extrémité de la fibre f, respectivement,
- un isolateur optique $I_1$ qui protège la sortie de l'émetteur optique $S_1$ du flux lumineux reçu par le terminal source.

Comme illustré également sur la figure 5, l'équipement terminal utilisateur comporte, suivant ce premier exemple de réalisation :

- un premier coupleur passif $C_2$ permettant d'utiliser une seule fibre pour les deux sens de transmission,
- un deuxième coupleur passif $C''_2$ permettant de prélever une partie de la porteuse optique reçue pour que le message $d_1$ qu'elle transporte dans le sens descendant puisse être détecté par un récepteur optique $D_2$ de ce terminal, l'autre partie étant destinée à être modulée par le message $d_2$ à émettre par le terminal utilisateur, et renvoyée au terminal source, toujours à la longueur d'onde $\lambda$ , mais notée $\lambda^r$ (pour renvoyée),
- un moyen de modulation $M_2$, par exemple composant électro-optique du type modulateur d'intensité ou amplificateur optique à semi-conducteur, qui reçoit d'une part ladite partie destinée à être modulée, issue du coupleur $C''_2$, et un signal de commande de modulation d'intensité, correspondant aux informations $d_2$ à émettre par le terminal utilisateur,
- un isolateur optique $I_2$ qui protège la sortie du modulateur $M_2$ du flux lumineux reçu par le terminal utilisateur,
- le récepteur optique $D_2$ pour la détection du signal transmis dans le sens descendant, restituant les informations $d_1$ émises par le terminal source.

Le coupleur $C''_2$ est muni d'un premier accès connecté à l'un des accès, dit second accès, du coupleur $C_2$, d'un second accès connecté au récepteur optique $D_2$, et d'un troisième accès connecté à une entrée du

moyen de modulation, $M_2$, comme indiqué plus haut.

L'isolateur $I_2$ est muni d'un accès connecté à la sortie du moyen de modulation $M_2$ et d'un accès connecté à l'un des accès, dit troisième accès, du coupleur $C_2$.

Le coupleur $C_2$ est en outre muni d'un premier accès connecté à une extrémité de la fibre f.

On notera que l'équipement terminal utilisateur, composé d'un récepteur optique, d'un modulateur, et de quelques composants optiques passifs, est donc relativement simple.

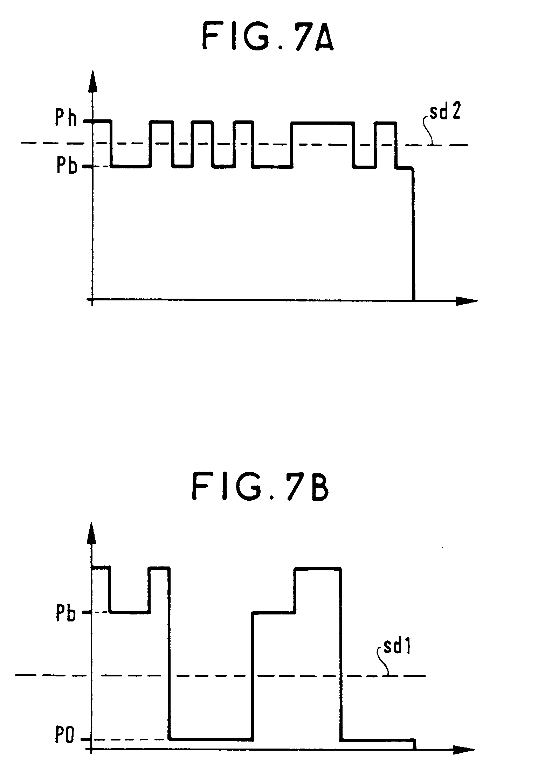

Comme illustré sur la figure 7A qui représente la forme temporelle de la puissance optique au point A de la figure 5, c'est-à-dire de la puissance optique reçue par le détecteur que comporte en l'occurence le récepteur $D_2$ du terminal utilisateur, le seuil sd2 de décision de ce récepteur est réglé avantageusement à une valeur sensiblement égale à la demi-somme des valeurs des niveaux Pb et Ph.

Comme illustré sur la figure 7B qui représente la forme temporelle de la puissance optique au point B de la figure 5, c'est-à-dire en sortie du modulateur d'émission $M_2$ de l'équipement terminal utilisateur, le seuil sdl de décision du récepteur $D_1$ du terminal source est réglé avantageusement à une valeur sensiblement égale à la demi-somme des valeurs des niveaux P0 et Pb.

Il est par ailleurs à remarquer que quel que soit le type de modulation considéré, les signaux modulants utilisés peuvent être indifféremment numériques ou analogiques.

On notera également que dans le cas de signaux modulants numériques il n'est pas nécessaire que le débit du signal modulant appliqué en second soit inférieur à celui du signal modulant appliqué en premier et que, en particulier, les débits de ces signaux modulants peuvent être égaux.

**Revendications**

1. Système de transmission bidirectionnelle, notamment par fibre optique, entre un terminal dit terminal source et un terminal dit terminal utilisateur, avec une porteuse unique pour les deux sens de transmission, issue d'une source localisée dans le terminal source;
caractérisé en ce qu'il comporte, pour chaque sens de transmission, des moyens ($S_1$, $M_2$) de modulation de l'intensité de ladite porteuse;
et en ce que le taux de la modulation appliquée en premier, soit pour la transmission du terminal source vers le terminal utilisateur, dite transmission dans le sens descendant, est suffisamment faible pour permettre en permanence la modulation d'intensité appliquée en second, soit pour la transmission du terminal utilisateur vers le terminal source, dite transmission dans le sens montant.

2. Système selon la revendication 1, caractérisé en ce qu'il comporte un même support (F) pour la transmission dans les deux sens.

3. Système selon l'une des revendications 1 et 2, caractérisé en ce que la modulation appliquée pour la transmission dans le sens descendant étant effectuée entre un niveau bas, Pb, relativement éloigné de zéro, et un niveau haut, Ph, et la modulation appliquée pour la transmission dans le sens montant étant effectuée entre un niveau Po voisin de zéro et le niveau Pb, le seuil de décision (sd2) du récepteur optique ($D_2$) du terminal utilisateur est réglé à une valeur sensiblement égale à la demi-somme des valeurs des niveaux Pb et Ph, et le seuil de décision (sd1) du récepteur optique ($D_1$) du terminal source est réglé à une valeur sensiblement égale à la demi-somme des valeurs des niveaux Po et Pb.

**Patentansprüche**

1. System zur bidirektionalen Übertragung, insbesondere durch optische Faser, zwischen einem als Quellenendgerät bezeichneten Endgerät und einem als Anwender-Endgerät bezeichneten Endgerät mit einem einzigen, aus einer im Quellenendgerät lokalisierten Quelle kommenden Träger für beide Übertragungerichtungen; **dadurch gekennzeichnet,** daß es für jede Übertragungsrichtung Mittel ($S_1$, $M_2$) zur Modulation der Intensität des Trägers umfaßt; und daß das zuerst, d.h. für die Übertragung vom Quellenendgerät zum Anwender-Endgerät, als Übertragung in Abwärtsrichtung bezeichnet, angewendete Modulationsverhältnis klein genug ist, um ständig die als zweites, d.h. für die Übertragung vom Anwender-Endgerät zum Quellen-Endgerät, als Aufwärtsübertragung bezeichnet, angewendete Intensitätsmodulation zu gestatten.

2. System nach Anspruch 1, dadurch gekennzeichnet, daß es ein- und dasselbe Trägermedium (f) für die Übertragung in beide Richtungen umfaßt.

3. System nach einem der Ansprüche 1 und 2, dadurch gekennzeichnet, daß die für die Übertragung in Abwärtsrichtung angewendete Modulation zwischen einem relativ weit von Null entfernten niedrigen Pegel Pb und einem hohen Pegel Ph durchgeführt wird, und daß die zur Übertragung in Aufwärtsrichtung angewendete Modulation zwischen einem Pegel Po in der Nähe von Null und dem Pegel Pb durchgeführt wird, wobei die Entscheidungsschwelle ($sd_2$) des optischen Empfängers ($D_2$) des Anwender-Endgerätes auf einen Wert im wesentlichen gleich der halben Summe der Werte der Pegel Pb und Ph geregelt ist und die Entscheidungsschwelle ($sd_1$) des optischen Empfängers ($D_1$) des Quellenendgerätes auf einen Wert im wesentlichen gleich der halben Summe der Werte der Pegel Po und Pb geregelt ist.

## Claims

1. A system for bidirectional transmission, in particular by optical fiber, between a "source" terminal and a "user" terminal, with a single carrier for both transmission directions, which carrier comes from a source located in the source terminal;

   said system being characterized in that, for each transmission direction, it includes modulation means ($S_1$, $M_2$) for modulating the intensity of said carrier;
   and in that the modulation depth applied firstly, i.e. for "down" transmission from the source terminal to the user terminal, is small enough to enable the intensity modulation applied secondly, i.e. for "up" transmission from the user terminal to the source terminal, to be performed permanently.

2. A system according to claim 1, characterized in that it has the same medium (F) for transmission in both directions.

3. A system according to claim 1 or 2, characterized in that, with the modulation applied for down transmission being effected between a low level, Pb, relatively distant from zero, and a high level Ph, and with the modulation applied for up transmission being effected between a level Po close to zero and the level Pb, the decision threshold (sd2) of the optical receiver ($D_2$) of the user terminal is set at a value substantially equal to half the sum of the values of levels Pb and Ph, and the decision threshold (sd1) of the optical receiver ($D_1$) of the source terminal is set at a value substantially equal to half the sum of the values of levels Po and Pb.

# FIG.1

# FIG. 2

FIG.3

FIG.4

EP 0 541 409 B1

# FIG.5

EP 0 541 409 B1

# FIG.6

# FIG. 7A

# FIG. 7B